# EUROPEAN PATENT APPLICATION

(11) **EP 4 602 926 A1**
(43) Date of publication of application: **20.08.2025**
(21) Application number: 22962113.1
(22) Date of filing: 14.10.2022
(51) Int. Cl.: A23L 5/00, A23L 27/00, G06Q 30/0601

(54) **METHOD FOR PROVIDING COMPOSITION FOR ADDING FLAVOR/AROMA, AND DEVICE USED IN SAME**

(71) Applicant: Moriyama, Kojiro, Tokyo 102-0074 (JP)
(72) Inventor: Moriyama, Kojiro, Tokyo 102-0074 (JP)
(74) Representative: Gulde & Partner
(86) International application number: PCT/JP2022/038409
(87) International publication number: WO 2024/079896

(57) **Abstract**

Sales efficiency of a store in providing a food product is improved, and satisfaction of a consumer is increased. A method of providing a flavor and aroma imparting composition including step 1: a step of causing a user to designate a flavor and an aroma using a terminal device connected to the Internet and transmitting information including the flavor and the aroma to a provider, step **2: a** step of causing the provider to produce a flavor and aroma imparting composition by mixing raw ingredients in accordance with the flavor and the aroma designated in step 1 using a blending device for flavor and aroma raw ingredients, and step 3: a step of causing the user to receive the flavor and aroma imparting composition produced in step 2 is provided. A blending device and a flavor and aroma imparting device used in the method of providing are provided.

## Description

### Technical Field

The present invention relates to a method of providing a flavor and aroma imparting composition, and a device used in the method. Specifically, the present invention relates to a method of providing a purchaser of a food product with a flavor and aroma imparting ingredient for imparting a preferred flavor and aroma to the food product such as mineral water or salad, and a blending device and a flavor and aroma imparting device used in the method.

### Background Art

Products customized in accordance with requests of users are well-known in the fashion industry, jewelry, computer-related products, and the like. These products are valued as so-called made-to-order products. The widest variety of products are industrially produced in accordance with preference of the users in the fields of food, beverages, and seasonings, and attempts have also been made to produce made-to-order products in these fields.

For example, PTL 1 discloses an automated retail machine (a vending machine) that provides customized beverage products. In the automated retail machine, a beverage to be purchased can be individually selected by customizing various components such as sweetener, a supplement, a flavoring component, and a wine component.

For example, PTL 2 discloses customizing composition of a sweet composition and packaging the customized sweet composition.

However, in actuality, the made-to-order products have been rarely commercialized in the fields of food, beverages, and seasonings. For example, while a variety of coffee drinks are prepared in coffee shops or convenience stores, users are provided with individually packaged sugar, sweetener, and creamer, and means for matching individual preference of the users includes a combination of sugar, sweetener, and creamer and selection of their quantities. Options for the users are limited, and a problem of generating waste because of individual packaging also arises.

Nowadays, convenience stores that sell coffee drinks by causing the users to operate a coffee machine have spread. In such a convenience store, a purchaser selects individually packaged sugar, sweetener, and creamer after operating the coffee machine, opens their containers, and adds a preferred flavor to a coffee drink taken from the coffee machine. Since such an operation of the purchaser requires time and space, customers stay longer or cause congestion in many convenience stores, and this poses problems in sales performance of the stores and satisfaction of the users.

Many of the purchasers using the coffee machine in the convenience store are known to be so-called repeat customers and tend to purchase coffee with the same flavor (the same choice of sugar and milk) every time. In a case where such a repeat customer uses the coffee machine, means for quickly taking and opening a set of sugar and a milk drink combined in accordance with the preference of the user and quickly flavoring the coffee drink taken from the coffee machine benefits both of the convenience store and the user.

An effect of advertising a product to the users using an expression such as "selected by others" or "popular with everyone" is known to be high. In recent years, it has become more common to use an advertising technique of efficiently increasing purchase intent for a specific product on the Internet in a short period by incorporating an expression such as "selected by an influencer" or "one's favorite". Such an advertising technique is effective for a product having a relatively low price and a large number of potential users. In particular, for food products, a customized product that can provide familiarity with so-called celebrities is likely to meet satisfaction of the user. However, in an existing production facility suitable for mass production, it is technically difficult to customize inexpensive food products.

### Citation List

### Patent Literature

[PTL 1] Japanese Unexamined Patent Application Publication No. 2019-532876
[PTL 2] Japanese Unexamined Patent Application Publication No. 2010-503404

### Summary of Invention

### Technical Problem

There is still room for improvement in made-to-order products of beverages and seasonings. There is a demand for means for efficiently customizing food products that are mass-produced and that are relatively inexpensive and familiar with users, directly in the store to specifications that increase satisfaction of the user. Solution to Problem

The present inventor has sought means for customizing food products that can be casually purchased by a user, to content of high satisfaction for the user without affecting sales efficiency of a food product store. Consequently, the present inventor has conceived a method of providing a product to enable individual users to use a product of high satisfaction by imparting a preferred flavor and aroma to a familiar food product. That is, the present invention includes the following.

(Invention 1) A method of providing a flavor and aroma imparting composition includes steps 1, 2, and 3 below.

Step 1: a step of causing a user to designate a flavor and an aroma using a terminal device connected to the Internet and transmitting information including the flavor and the aroma to a provider.

Step 2: a step of causing the provider to produce a flavor and aroma imparting composition by mixing raw ingredients in accordance with the flavor and the aroma designated in step 1 using a blending device for flavor and aroma raw ingredients.

Step 3: a step of causing the user to receive the flavor and aroma imparting composition produced in step 2.

(Invention 2) In the method of providing a flavor and aroma imparting composition according to Invention 1, in step 1, the user designates the flavor and the aroma based on balance among sweetness, sourness, saltiness, bitterness, and savoriness and/or presence or absence or a combination of aroma components.

(Invention 3) In the method of providing a flavor and aroma imparting composition according to Invention 1, in step 1, the user is capable of designating a flavor and an aroma previously designated by the user or one or more other users.

(Invention 4) In the method of providing a flavor and aroma imparting composition according to Invention 1, in step 2, the provider produces the flavor and aroma imparting composition sealed in an oblong container.

(Invention 5) In the method of providing a flavor and aroma imparting composition according to Invention 1, in step 2, the provider produces the flavor and aroma imparting composition shaped into an oblong shape.

(Invention 6) In the method of providing a flavor and aroma imparting composition according to Invention 1, in step 3, the provider hands the flavor and aroma imparting composition produced in step 2 to the user in a store, and the user is capable of purchasing a product to which the flavor and aroma imparting composition is applied in the store.

(Invention 7) In the method of providing a flavor and aroma imparting composition according to Invention 1, in step 3, the provider hands the flavor and aroma imparting composition produced in step 2 to the user in a store, and the user is capable of adding the flavor and aroma imparting composition to a food product in the store.

(Invention 8) The method of providing a flavor and aroma imparting composition according to Invention 1 further includes step 4 below.

Step 4: a step of causing the provider to promote sales of the flavor and aroma imparting composition in accordance with the flavor and the aroma to the user or a potential user by setting a state where the user or the potential user is capable of browsing information related to a flavor and an aroma previously designated by one or more users on the terminal device connected to the Internet.

(Invention 9) A blending device used in the method of providing a flavor and aroma imparting composition according to Invention 1 includes communication means, mixing means, and sealing means and/or shaping means,
in which the communication means is capable of receiving information including balance among sweetness, sourness, saltiness, bitterness, and savoriness transmitted from a terminal device connected to the Internet and further transmitting information related to an operation of the blending device to a management center,
the mixing means prepares a flavor and aroma imparting composition by mixing raw ingredients which exhibit sweetness, sourness, saltiness, bitterness, and savoriness and are disposed in the blending device based on the balance in accordance with the information including the balance among sweetness, sourness, saltiness, bitterness, and savoriness,
the sealing means seals the flavor and aroma imparting composition prepared by the mixing means in an oblong container, and
the shaping means shapes the flavor and aroma imparting composition prepared by the mixing means into an oblong shape.

(Invention 10) A flavor and aroma imparting device used in the method of providing a flavor and aroma imparting composition according to Invention 1 includes a flavor and aroma unit, a food product unit, and an injection unit,
in which the flavor and aroma unit is a part in which the flavor and aroma imparting composition is disposed,
the food product unit is a part in which a food product to which the flavor and aroma imparting composition is applied is disposed, and
the injection unit adds the flavor and aroma imparting composition disposed in the flavor and aroma unit to the food product disposed in the food product unit.

### Advantageous Effects of Invention

The method of providing of the present invention enables the user to obtain a beverage product of high satisfaction while enjoying a process from the flavor and aroma imparting composition to its use. The method of providing of the present invention can solve the problem of staying of the customers for a long time in the real store and is highly suitable for efficient advertisement using the Internet.

### Brief Description of Drawings

Fig. 1 is a reference view for understanding a method of the present invention.
Fig. 2 is an example of an image displayed on a smartphone of a user.
Fig. 3 is an example of an image displayed on the smartphone of the user.
Fig. 4 is an example of producing a flavor and aroma imparting composition.
Fig. 5 is an example of using the flavor and aroma imparting composition.
Fig. 6 is an example of an image displayed on the smartphone of the user.

### Description of Embodiments

### [1. Method of Providing Flavor and Aroma Imparting Composition]

A method (hereinafter, referred to as the "present method") of providing a flavor and aroma imparting composition of the present invention includes the following steps 1, 2, and 3. The present method may optionally include step 4 described later.

The "flavor and aroma imparting composition" in the present method refers to an ingredient that constitutes a part or more of food and that has a function of exhibiting a flavor and/or an aroma of the food. The flavor and aroma imparting composition may be in a powder form or a liquid form. For example, a so-called "beverage base" assumed to be diluted with water, hot water, carbonated water, milk, fruit juice, or the like, a concentrated soup, a concentrated beverage, a roux for curry or stew, sauces, seasonings that are seasoning food blended in accordance with specific dishes and that are generally provided as a "base for ...", and so-called "instant food" such as freeze-dried food correspond to the flavor and aroma imparting composition. All ingredients to be added to a completed dish as necessary, such as seasonings, sweetener, flavoring, spice, and thickening agents also correspond to the flavor and aroma imparting composition. Sweetener, acidulants, flavored powder, a syrup, and the like for seasoning a completed beverage such as coffee, tea, or a dairy product also correspond to the flavor and aroma imparting composition. Seasonings such as dressing and sauce also correspond to the food additive.

A "user" of the present method means a person who is a user of the flavor and aroma imparting composition and who performs any of purchase, use, or consumption of the flavor and aroma imparting composition using the present invention. A "provider" of the present method is a provider of the flavor and aroma imparting composition and also includes a person who produces, sells, transports, and advertises the flavor and aroma imparting composition under supervision or consignment of the provider.

### [Step 1]

Step 1 of the present method is a step of causing the user to designate a flavor and an aroma using a terminal device connected to the Internet and transmitting information including the flavor and the aroma to the provider. The terminal device is not limited as long as the terminal device includes a communication part connectable to the Internet and a display and input part used by the user to review and determine balance among sweetness, sourness, saltiness, bitterness, and savoriness and that can execute an application of the present method. Representative examples of such a terminal device include a PC, a tablet, a smartphone, and the like.

Step 1 of the present method is controlled by an application stored in a server connected to the Internet or an application downloaded to the terminal device used by the user.

Sweetness, sourness, saltiness, bitterness, and savoriness are five flavor elements. The "flavor" in the present method means intensity balance between these flavor elements. In step 1 of the present method, a combination of quantified intensities of each flavor is presented to the user as the balance. In step 1, for example, the minimum level and the maximum level of the intensity of each flavor are set to "0" and "5", and the user selects a level of each flavor in a range of 0 to 5. In selecting the level, the user may directly input a numerical value such as "2" or "3.5" or may set the levels by sliding marks displayed on a screen of the smartphone to preferred levels.

The "aroma" of the present method means a combination of aroma components. In the present method, the provider sets aroma components mixable with the flavor and aroma imparting composition in advance, and the user designates the "aroma" of the flavor and aroma imparting composition by selecting presence or absence of the aroma components in step 1.

In step 1, the user designates the "flavor and the aroma" by determining the intensity balance between the flavor elements and/or the presence or absence or the combination of the aroma components.

The application that executes the present method can display information about a flavor and an aroma designated by another user on the terminal used by the user. For example, information for prompting the user to select the flavor and the aroma, such as "flavor ranking of this month" or "cafe au lait mix loved by actor ...", is delivered to the smartphone of the user. In a case where such information is delivered, the user in step 1 can designate the previously blended flavor and aroma such as "summer flavor, the first place in the ranking of this month" or "cafe au lait mix selected by actor ...", on the terminal screen.

The information including the flavor and the aroma may include a name and an address of the user, information related to a payment method for the flavor and aroma imparting composition (a product), a desired date of product reception, a product collection method (a store for reception, a delivery destination, and the like), and the like.

In a case where the information including the flavor and the aroma is received on the provider side from the terminal device of the user, order confirmation can be transmitted to the terminal device of the user. Such an order confirmation operation follows a procedure of a general EC transaction.

### [Step 2]

Step 2 is a step of causing the provider to produce the flavor and aroma imparting composition by mixing raw ingredients in accordance with the flavor and the aroma designated in step 1 using a blending device for flavor and aroma raw ingredients. The blending device receives the information including the flavor and the aroma designated by the user in step 1. As a method of receiving the information, any of a method of directly receiving the information via the blending device through the Internet, a method of receiving the information via a center managing the present method through the Internet and then delivering information suitable for individual blending devices via an application of the center, a method of receiving the information via the center managing the present method through the Internet and then causing an operator to directly input the information into the individual blending devices based on individual information, or the like is used.

In the blending device, the flavor and aroma imparting composition may be stored in a container or a packaging material for each single-use amount, or the flavor and aroma imparting composition may be shaped for each single-use amount.

In step 2, the flavor and aroma imparting composition sealed in an oblong container can be produced. A shape of the oblong container is not particularly limited as long as the oblong container is easy to handle for the user, has an excellent esthetic appearance, and can discharge the flavor and aroma imparting composition inside the container by opening the container. Such a shape is preferably a columnar shape that gives the user an impression of "slim" and "stylish" and that allows contents to be easily discharged. A cylindrical container is particularly preferable from a viewpoint of being resistant to deformation and allowing the user to easily hold the container with fingers. A diameter of the cylinder is generally 5 mm or more and 30 mm or less and preferably 5 mm or more and 20 mm or less. A length of the cylinder is generally 30 mm or more and 250 mm or less and preferably 50 mm or more and 200 mm or less.

As a material of such a container, a material used for packaging food can be used without limitation. In general, a natural material including paper or natural fiber, a resin film, or a laminated film including the natural material, the resin film, and optionally a metal film is used. Selection of these materials is appropriately determined by considering goals such as having low reactivity to the contents, not posing problems in cost terms, and being able to achieve reduction in an amount of waste.

At least one end portion of the oblong container can be opened. A user of the product of the present invention can take the flavor and aroma imparting composition by opening the oblong portion. In general, both ends of the container are closed with caps after the flavor and aroma imparting composition is sealed in the cylindrical container. In this case, the flavor and aroma imparting composition can be taken from the container by removing the cap. The cap can be formed of a water-soluble material such as corn starch or an edible material such as sugar, and the container can be opened by immersing the cap part in water or the beverage.

As means for easy opening, a stretch film (a material that can be broken with a hand in one direction), a coating (changing thicknesses between a part to be separated and the remaining part), a seal member (opening by peeling off the container material), or the like may be disposed.

In step 2, the flavor and aroma imparting composition shaped into an oblong shape can be produced. A shape after shaping is preferably a columnar shape for the above reason. A cylindrical shape is particularly preferable from a viewpoint of being resistant to deformation and allowing the user to easily hold the flavor and aroma imparting composition with fingers. A diameter of the cylinder is generally 5 mm or more and 30 mm or less and preferably 5 mm or more and 20 mm or less. A length of the cylinder is generally 30 mm or more and 250 mm or less and preferably 50 mm or more and 200 mm or less.

In a case where the flavor and aroma imparting composition is shaped into an oblong shape, the shaped product itself can be held up. In this case, the product of the present invention can be used as a muddler. For example, the product of the present invention obtained by shaping the flavor and aroma imparting composition including cinnamon can be used as a muddler for milk tea. In this case, the user can enjoy a change in a flavor of the milk tea by dissolving the product of the present invention little by little.

In a case where the flavor and aroma imparting composition is shaped into an oblong shape, a beverage to which a preferred aroma and flavor are imparted can be created by putting the whole shaped product into the beverage in a PET bottle. For example, in a case where the user orders a flavor stick having an elongated rod shape as the flavor and aroma imparting composition and dissolves the flavor by putting the flavor stick in mineral water in a PET bottle, the user can enjoy "flavored water only for the user".

### [Step 3]

Step 3 of the present method is a step of causing the user to receive the flavor and aroma imparting composition produced in step 2. Preferably, step 3 is performed in an environment in which the user can add the flavor and aroma imparting composition to a completed food product or a half-completed food product immediately after receiving the flavor and aroma imparting composition.

For example, in step 3, the provider hands the flavor and aroma imparting composition produced in step 2 to the user in the store, and the user purchases the product to which the flavor and aroma imparting composition is applied in the store. For example, in a case where the user purchases a bottled beverage and a flavor extract sealed in a stick-shaped container as the flavor and aroma imparting composition in the store, the user can use a beverage customized to a preferred flavor by injecting the flavor extract into the bottled beverage at a favorite place and time outside the store.

For example, in step 3, the provider hands the flavor and aroma imparting composition produced in step 2 to the user in the store, and the user adds the flavor and aroma imparting composition to the food product in the store. For example, a coffee machine (a flavor and aroma imparting device) in which the user receives a cup for the coffee machine and a cartridge including cupped chocolate as the flavor and aroma imparting composition in the store, and in which the cup and the cartridge can be disposed is installed in the store. In this case, the user can purchase chocolate-flavored cafe au lait adjusted to a preferred flavor by disposing the cup and the cartridge in the coffee machine.

### [Step 4]

The present method can further include step 4 that is an advertising step: a step of causing the provider to promote sales of the flavor and aroma imparting composition in accordance with the flavor and the aroma to the user or a potential user by setting a state where the user or the potential user can browse information related to the flavor and the aroma previously designated by one or more users on the terminal device connected to the Internet. The potential user is a so-called net user and is a consumer who receives advertisements on various applications on the Internet. The terminal device may be any of a personal terminal device such as a smartphone, a tablet, or a PC, a terminal device installed on a payment counter of a store, or the above-described flavor and aroma imparting device.

In step 4, for example, the user or the potential user can be exposed to an advertising image or video including a text such as "1000 people have used ... flavor!", "romantic flavor recommended this autumn", or "100 people other than you are using flavor No. ...".

### [2. Blending Device]

The blending device used in step 2 generally includes communication means, mixing means, and sealing means or shaping means.

The communication means can receive information including the balance among sweetness, sourness, saltiness, bitterness, and savoriness transmitted from the terminal device connected to the Internet and further transmit information related to an operation of the blending device to the management center.

The mixing means prepares the flavor and aroma imparting composition by mixing the raw ingredients which exhibit sweetness, sourness, saltiness, bitterness, and savoriness and are disposed in the blending device based on the balance in accordance with the information including the balance among sweetness, sourness, saltiness, bitterness, and savoriness.

The sealing means seals the flavor and aroma imparting composition prepared by the mixing means in, for example, the oblong container. The shaping means shapes the flavor and aroma imparting composition prepared by the mixing means into, for example, the oblong shape. Any of the sealing means or the shaping means can be disposed in the individual blending devices. Alternatively, both of the sealing means and the shaping means may be disposed in the individual blending devices, and the user may operate any means in accordance with the information including the flavor and the aroma designated by the user.

### [3. Flavor and Aroma Imparting Device]

In the present method, the flavor and aroma imparting device can be used. The flavor and aroma imparting device of the present method includes a flavor and aroma unit, a food product unit, and an injection unit. The flavor and aroma unit is a part in which the flavor and aroma imparting composition is disposed. The food product unit is a part in which the food product to which the flavor and aroma imparting composition is applied is disposed. The injection unit is a part in which the flavor and aroma imparting composition disposed in the flavor and aroma unit is added to the food product disposed in the food product unit.

Such a flavor and aroma imparting device may be installed together with a general coffee machine in a convenience store or may double as a coffee machine.

The flavor and aroma imparting device can be further provided with a communication part. For example, the communication part receives the information including the flavor and the aroma designated by the user or information indicating payment completion by communicating with the terminal device of the user, and the flavor and aroma unit, the food product unit, and the injection unit operate based on the received information. For example, the communication part can transmit operation status of the flavor and aroma imparting device, need for replacing a component, need for refilling with the flavor and aroma imparting composition, and the like to the management center through the Internet.

The flavor and aroma imparting device can be further provided with a display part for displaying the operation status (usable, injecting the flavor and aroma imparting composition, or the like) of the device or the advertisement. The display part can show an operation procedure of the flavor and aroma imparting device to the user using an image, audio, a video, or the like.

For example, a barcode reading part as the communication part, tanks as the flavor and aroma unit filled with a sweet syrup and extracts of lemon, mint, and ginger as flavors, a table for fixing an uncapped PET bottle of mineral water as the food product unit, and pipes extending from the tanks to an opening portion of the PET bottle as the injection unit are disposed in the flavor and aroma imparting device. The user fixes the uncapped PET bottle of carbonated water on the table and scans a barcode displayed on the smartphone in advance with the barcode reading part. The barcode reading part acquires information corresponding to "payment: completed, sweet syrup: present, added flavor: lemon and mint" and transmits the information to a controller of the flavor and aroma imparting device. The controller opens the pipes connected to the tanks of the sweet syrup, the lemon flavor, and the mint flavor by operating the injection unit and injects a predetermined amount of a liquid mixture of the syrup, the lemon flavor, and the mint flavor into the PET bottle of carbonated water.

### Example

### [Method of Providing Flavor and Aroma Imparting Composition]

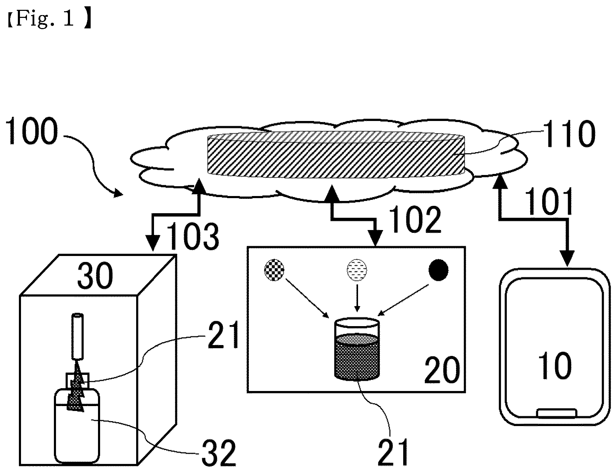

Fig. 1 is a reference view for understanding the method of the present invention. The application (110) that executes the method (100) of providing a flavor and aroma imparting composition controls step 1 (101), step 2 (102), and step 3 (103). In step 1 (101), the user designates the flavor and the aroma and pays a price of the product through the smartphone (10) connected to the Internet. In step 2 (102), the blending device (20) produces a flavor liquid (21) as the flavor and aroma imparting composition in accordance with the flavor and the aroma designated by the user. In step 3 (103), the flavor and aroma imparting device (30) adds the flavor liquid (21) to the beverage (32) selected by the user. The blending device (20) may be integrated or combined with the flavor and aroma imparting device (30).

### [Example 1 of Smartphone Display]

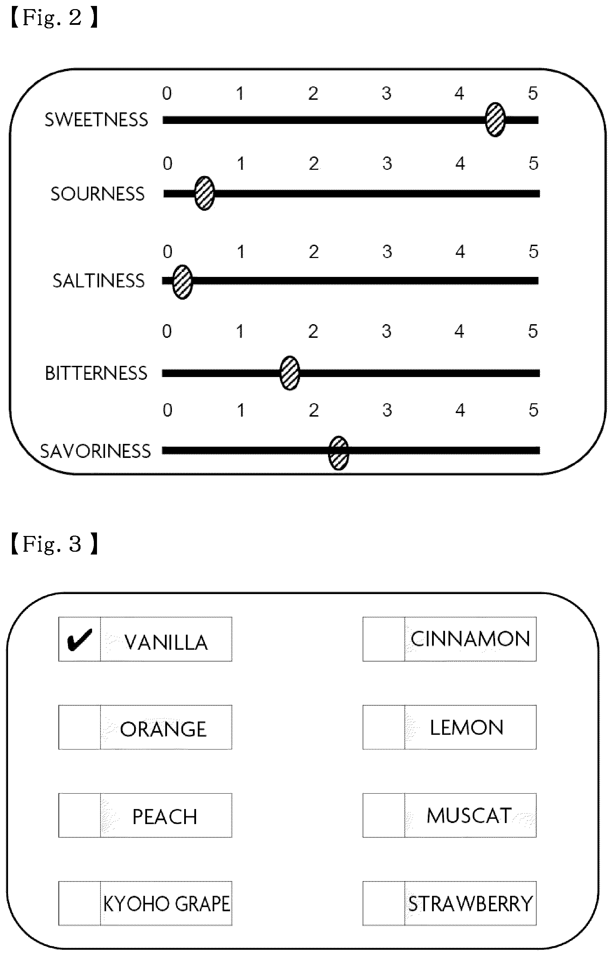

Figs. 2 and 3 illustrate a part of the screen displayed on the smartphone in step 1 of the present method. Details are omitted. As illustrated in Fig. 2, the user can set the intensities of the flavor elements by sliding the marks. As illustrated in Fig. 3, the user can select a preferred flavor by touching a checkbox.

### [Example of Producing Flavor and Aroma Imparting Composition]

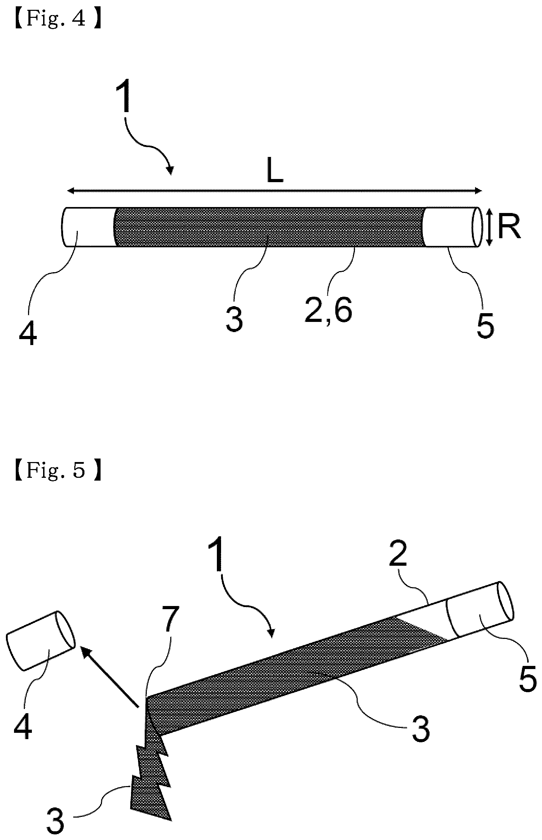

Fig. 4 illustrates Example (1) of the product of the present invention. In Example (1), a powdered beverage ingredient (3) for imparting a flavor to coffee is used as the flavor and aroma imparting composition. In Example (1), the beverage ingredient (3) including dry powder of a black tea extract, sugar, powdered milk, and cinnamon powder is sealed in a paper tube (2). A bottom surface of the tube (2) has a circular shape having a diameter (R) of approximately 12 mm, and a length (L) of the tube (2) is approximately 175 mm. The product (1) has a cylindrical shape as a whole. Plastic caps (4, 5) are attached to both ends of the tube (2), and the beverage ingredient (3) does not spill out of the tube (2) in the state illustrated in Fig. 4.

While the beverage ingredient (3) in the tube (2) and the caps (4, 5) have different colors in Fig. 4, only an opaque outer surface (6) of the tube (2) is actually visible from an outside of the tube (2).

### [Example of Using Flavor and Aroma Imparting Composition]

Fig. 5 illustrates a state where the product (1) illustrated in Fig. 4 is used. Details are omitted. The user of the product (1) opens the tube (2) by removing one cap (4). The powdered beverage ingredient (3) is discharged from an opening portion (7). The user creates cinnamon-flavored milk tea prepared with the preferred flavor and aroma of the user by pouring the beverage ingredient (3) into black tea extracted using a machine of the store.

### [Example 2 of Smartphone Display]

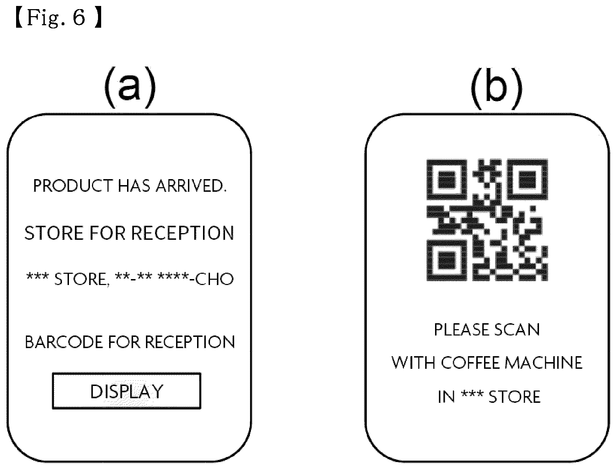

Fig. 6 illustrates an example of an image displayed on the smartphone of the user in order to execute step 3 of the present method. The user who views the screen of Fig. 6(a) displays Fig. 6(b). The two-dimensional barcode of Fig. 6(b) is read by the coffee machine installed in the designated store. The coffee machine operates in accordance with read information, and the product customized to the preferred flavor and aroma of the user is provided to the user.

### Industrial Applicability

The product of the present invention provides the made-to-order flavor and aroma imparting composition including the flavor components and the aroma components precisely corresponding to requirements of the user. In a case where the method of the present invention is used, the user can customize the mass-produced food product to the preferred flavor and aroma. Thus, satisfaction of the user with the product is increased. The present invention can introduce new attractive products to the food market and is expected to revitalize the food and retail market.

### Reference Signs List

1 Example of Product of Present Invention
2 Paper Tube
3 Beverage Ingredient (Flavor and Aroma Imparting Composition)
4 Cap
5 Cap
6 Outer Surface
7 Opening Portion
10 Smartphone
20 Blending Device
21 Flavor Liquid (Flavor and Aroma Imparting Composition)
30 Flavor and Aroma Imparting Device
32 Beverage
100 Method of Providing Flavor and Aroma Imparting Composition
101 Step 1
102 Step 2
103 Step 3
110 Application

## Claims

1. A method of providing a flavor and aroma imparting composition, the method comprising steps 1, 2, and 3 below:
step 1: a step of causing a user to designate a flavor and an aroma using a terminal device connected to the Internet and transmitting information including the flavor and the aroma to a provider;
step 2: a step of causing the provider to produce a flavor and aroma imparting composition by mixing raw ingredients in accordance with the flavor and the aroma designated in step 1 using a blending device for flavor and aroma raw ingredients; and
step 3: a step of causing the user to receive the flavor and aroma imparting composition produced in step 2.

2. The method of providing a flavor and aroma imparting composition according to Claim 1,
wherein, in step 1, the user designates the flavor and the aroma based on balance among sweetness, sourness, saltiness, bitterness, and savoriness and/or presence or absence or a combination of aroma components.

3. The method of providing a flavor and aroma imparting composition according to Claim 1,
wherein, in step 1, the user is capable of designating a flavor and an aroma previously designated by the user or one or more other users.

4. The method of providing a flavor and aroma imparting composition according to Claim 1,
wherein, in step 2, the provider produces the flavor and aroma imparting composition sealed in an oblong container.

5. The method of providing a flavor and aroma imparting composition according to Claim 1,
wherein, in step 2, the provider produces the flavor and aroma imparting composition shaped into an oblong shape.

6. The method of providing a flavor and aroma imparting composition according to Claim 1,
wherein, in step 3, the provider hands the flavor and aroma imparting composition produced in step 2 to the user in a store, and the user is capable of purchasing a product to which the flavor and aroma imparting composition is applied in the store.

7. The method of providing a flavor and aroma imparting composition according to Claim 1,
wherein, in step **3,** the provider hands the flavor and aroma imparting composition produced in step 2 to the user in a store, and the user is capable of adding the flavor and aroma imparting composition to a food product in the store.

8. The method of providing a flavor and aroma imparting composition according to Claim **1,** further comprising step 4 below:
step 4: a step of causing the provider to promote sales of the flavor and aroma imparting composition in accordance with the flavor and the aroma to the user or a potential user by setting a state where the user or the potential user is capable of browsing information related to a flavor and an aroma previously designated by one or more users on the terminal device connected to the Internet.

9. A blending device used in the method of providing a flavor and aroma imparting composition according to Claim 1, the device comprising:
communication means;
mixing means; and
sealing means and/or shaping means,
wherein the communication means is capable of receiving information including balance among sweetness, sourness, saltiness, bitterness, and savoriness transmitted from a terminal device connected to the Internet and further transmitting information related to an operation of the blending device to a management center,
the mixing means prepares a flavor and aroma imparting composition by mixing raw ingredients which exhibit sweetness, sourness, saltiness, bitterness, and savoriness and are disposed in the blending device based on the balance in accordance with the information including the balance among sweetness, sourness, saltiness, bitterness, and savoriness,
the sealing means seals the flavor and aroma imparting composition prepared by the mixing means in an oblong container, and
the shaping means shapes the flavor and aroma imparting composition prepared by the mixing means into an oblong shape.

10. A flavor and aroma imparting device used in the method of providing a flavor and aroma imparting composition according to Claim **1,** the device comprising:
a flavor and aroma unit;
a food product unit; and
an injection unit,
wherein the flavor and aroma unit is a part in which the flavor and aroma imparting composition is disposed,
the food product unit is a part in which a food product to which the flavor and aroma imparting composition is applied is disposed, and
the injection unit adds the flavor and aroma imparting composition disposed in the flavor and aroma unit to the food product disposed in the food product unit.
